# EUROPÄISCHE PATENTSCHRIFT

(11) **EP 2 215 955 B1**
(45) Veröffentlichungstag und Bekanntmachung des Hinweises auf die Patenterteilung: **26.07.2017**
(21) Anmeldenummer: 09005448.7
(22) Anmeldetag: 17.04.2009
(51) Int. Cl.: A47L 15/42

(54) **Geschirrspüler mit Wärmepumpe**
Dishwasher with heat pump
Lave-vaisselle doté d'une pompe à chaleur

(30) Priorität: 09.02.2009 EP 09001756
(43) Veröffentlichungstag der Anmeldung: 11.08.2010
(73) Patentinhaber: V-Zug AG, CH-6301 Zug (CH)
(72) Erfinder: Werner, Jürg, 8908 Hedingen (CH); Dober, Ernst, 6036 Dierikon (CH)
(74) Vertreter: Sutter, Kurt

(56) Entgegenhaltungen:
- EP-A- 1 864 603
- EP-A- 1 917 899
- DE-A1- 3 048 268
- JP-A- 10 080 391

## Beschreibung

Die Erfindung betrifft einen Geschirrspüler sowie ein Verfahren zu dessen Betrieb gemäss Oberbegriff der unabhängigen Ansprüche.

Um die Energieeffizienz von Geschirrspülern zu verbessern, wurde u.a. vorgeschlagen, einen Wärmetauscher vorzusehen, welcher dazu dient, dem Bottich Wärme zu entziehen und sie dem Frischwasser zuzuführen.

Darüber hinaus wurden in EP 1 864 603 und und JP 10080391 Geschirrspüler mit Wärmepumpen vorgeschlagen, um die Effizienz des Geräts zu verbessern.

Aufgabe der vorliegenden Erfindung ist es, die Energieeffizienz eines Geschirrspülers weiter zu verbessern. Diese Aufgabe wird von den unabhängigen Ansprüchen gelöst. Demgemäss wird eine Wärmepumpe mit mindestens einem Kondensator und mindestens einem Verdampfer eingesetzt, mit denen dem Prozesswasser oder dem Bottich Wärme entzogen und/oder zugeführt werden kann.

Weiter wird das Geschirr in mindestens einer ersten und einer zweiten Prozessphase gereinigt, wobei am Ende der ersten Prozessphase Prozesswasser aus dem Bottich in einen Ablaufbereich geleitet wird und am Anfang der zweiten Prozessphase Frischwasser in den Bottich geführt wird, wobei in der zweiten Prozessphase dem Prozesswasser im Ablaufbereich mit der Wärmepumpe Wärme entzogen und dem Prozesswasser im Bottich zugeführt wird. Auf diese Weise wird die Effizienz des Geräts verbessert.

Vorzugsweise wird der Kondensator bzw. (falls mehrere Kondensatoren vorhanden sind) mindestens einer der Kondensatoren und/oder der Verdampfer bzw. (falls mehrere Verdampfer vorhanden sind) mindestens einer der Verdampfer an einer Wand des Bottichs angeordnet, insbesondere dieser Wand entlang verlaufend, wodurch in einfacher Weise, d.h. ohne spezielle Wärmetauschvorrichtungen etc., ein direkter Wärmeeintrag bzw. ein direkter Wärmeentzug ermöglicht wird. Unter "Wand" des Bottichs ist dabei eine vertikale Wand des Bottichs, dessen Decke sowie auch dessen Boden zu verstehen.

Vorzugsweise werden mindestens ein Verdampfer sowie mindestens ein Kondensator am Bottich angeordnet. In diesem Falle kann während der Trockenphase mit der Wärmepumpe einem ersten Wandbereich Wärme zugeführt und einem zweiten Wandbereich Wärme entzogen werden, um so einen Konvektionsstrom im Bottich zu erzeugen und der Prozessluft Wasser zu entziehen.

In einer besonders vorteilhaften Ausführung wird zumindest an einer Seitenwand des Bottichs ein Kondensator vorgesehen. Dieser dient z.B. dazu, während der Trockenphase den Bottich zu heizen. Indem er an einer Seitenwand und nicht am Boden angeordnet ist, wird vermieden, dass er eine unnötig grosse Menge von Kondenswasser aufheizt. Vorzugsweise wird an einer gegenüber liegenden Seitenwand ein Verdampfer vorgesehen, so dass zwischen dem Verdampfer und dem Kondensator ein Konvektionsstrom für Trockenluft entsteht. Unter "Seitenwand" ist dabei eine vertikale Wand des Bottichs, inklusive Rückwand (oder gegebenenfalls Vorderwand) zu verstehen.

Im anspruchsgemässen Geschirrspüler wird der Verdampfer bzw. (falls mehrere Verdampfer vorhanden sind) mindestens einer der Verdampfer thermisch mit dem Ablaufbereich gekoppelt, durch welchen Wasser vom Bottich nach Gebrauch an die Kanalisation abgegeben wird. So kann dem Abwasser Wärme entzogen werden.

Vorzugsweise sind zwei Kondensatoren und zwei Verdampfer vorgesehen. Ein erster Kondensator und ein erster Verdampfer dienen dazu, in der Reinigungsphase Wärme dem Ablaufbereich zu entziehen und dem Bottich zuzuführen. Ein zweiter Kondensator und ein zweiter Verdampfer dienen dazu, in der Trockenphase der Prozessluft Feuchte zu entziehen.

Weitere bevorzugte Ausführungen der Erfindung ergeben sich aus den abhängigen Ansprüchen sowie aus der nun folgenden Beschreibung anhand der Figuren. Dabei zeigen:
Fig. 1 eine erste Ausführung eines Geschirrspülers,
Fig. 2 eine zweite Ausführung eines Geschirrspülers mit nur einem Verdampfer,
Fig. 3 eine dritte Ausführung eines Geschirrspülers mit nur einem Verdampfer,
Fig. 4 eine vierte Ausführung eines Geschirrspülers mit Überbrückungsventil,
Fig. 5 eine fünfte Ausführung eines Geschirrspülers mit zusätzlicher Zirkulationspumpe,
Fig. 6 eine sechste Ausführung eines Geschirrspülers mit Abwassertank,
Fig. 7 eine siebte Ausführung eines Geschirrspülers mit koaxialem Wärmetauscher,
Fig. 8 einen Schnitt durch das Abwasserrohr einer weiteren Ausführung der Erfindung und
Fig. 9 eine achte Ausführung eines Geschirrspülers mit zwei Kondensatoren am Bottich.

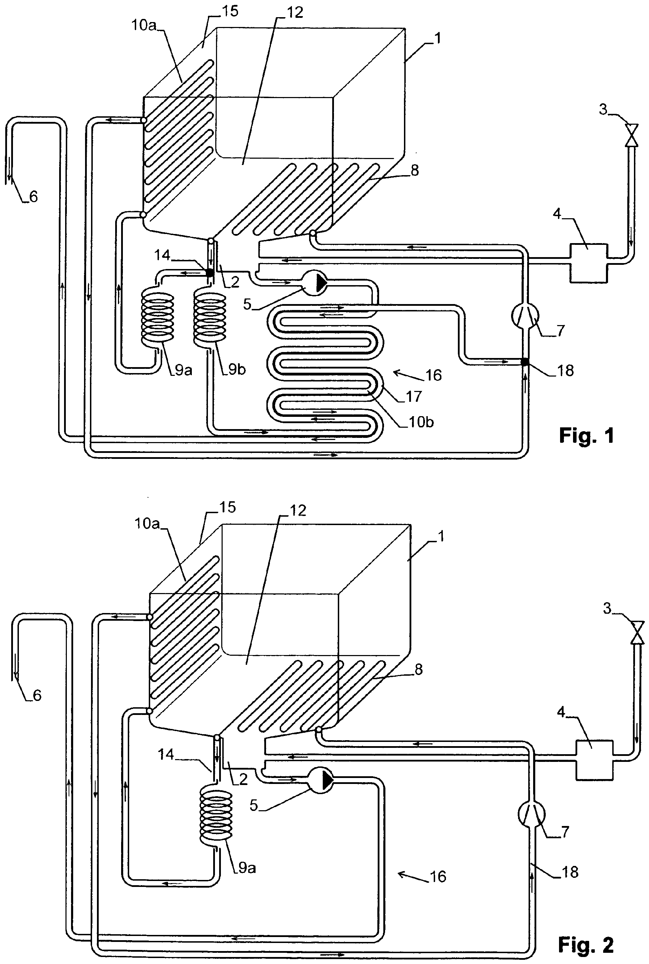

Der in Fig. 1 schematisch dargestellte Geschirrspüler besitzt einen Bottich 1 zur Aufnahme des Spülguts, wie z.B. Besteck, Geschirr oder dergleichen. Weiter besitzt der Geschirrspüler in bekannter Weise (nicht gezeigt) Sprüharme sowie eine Zirkulationspumpe zum Umpumpen von Prozesswasser aus dem Sumpf 2 in die Sprüharme. Das Spülgut ist in einem oder mehreren Geschirrkörben gelagert. Eine Steuerung kontrolliert und steuert die Operationen aller Komponenten. Ein derart ausgestaltetes Gerät ist dem Fachmann bekannt.

Frischwasser wird dem Gerät über ein Frischwasserventil 3 und einen Enthärter 4 zugeführt. Gebrauchtes Wasser wird von einer Ablaufpumpe 5 in eine Abwasserleitung 6 abgepumpt. Auch diese Komponenten sind dem Fachmann grundsätzlich bekannt.

Der Geschirrspüler besitzt weiter eine Wärmepumpe umfassend einen Kompressor 7, von welchem ein Wärmepumpenmedium zu einem oder mehreren Kondensatoren 8 gepumpt wird, wo unter Abgabe von Wärme eine Verflüssigung stattfindet. Vom Kondensator 8 gelangt das Medium über mindestens ein Expansionsventil 9a, 9b zu mindestens einem Verdampfer 10a, 10b, wo das Medium unter Aufnahme von Wärme verdampft. Vom Verdampfer 10a, 10b läuft das Medium zurück zum Kompressor 7.

Der Begriff "Expansionsventil" umfasst dabei jegliche Art von Kapillaren, Drosseln oder dergleichen, die geeignet sind, den Druck des in der Wärmepumpe gepumpten Mediums vor dem Verdampfer zu reduzieren.

In der in Fig. 1 gezeigten Ausführung ist ein erster Kondensator 8 am Boden 12 des Bottichs vorgesehen und steht mit diesem in direktem, Wärme leitenden Kontakt und/oder ist auf dessen Innenseite angeordnet, so dass der Boden 12 resp. das Prozesswasser im Bereich des Kondensators 8 erwärmt werden kann.

Weiter sind in der in Fig. 1 gezeigten Ausführung zwei Verdampfer 10a, 10b vorgesehen, wobei jedem davon jeweils ein eigenes Expansionsventil 9a, 9b zugeordnet ist. Weiter ist vor den Expansionsventilen eine Weiche 14 vorgesehen, um das gepumpte Medium wahlweise dem einen oder dem anderen Verdampfer 10a bzw. 10b zuzuführen.

Der erste Verdampfer 10a ist thermisch mit dem Bottich 1 gekoppelt, vorzugsweise indem er an einer ersten Seitenwand 15 desselben angeordnet ist. Somit kann mit dem ersten Verdampfer 10a der Bottich 1 und insbesondere die genannte Seitenwand 15 gekühlt werden.

Der zweite Verdampfer 10b ist thermisch mit einem Ablaufbereich 16 des Geräts gekoppelt, wobei der Begriff "Ablaufbereich" einen Bereich kennzeichnet, durch welchen das Wasser vom Bottich 1 nach Gebrauch an die Abflussleitung 6 abgegeben wird. Somit kann mit dem zweiten Verdampfer 10b dem Ablaufbereich 16 und insbesondere dem dort vorhandenen Wasser Wärme entzogen werden.

Konkret besteht der Ablaufbereich 16 in der Ausführung nach Fig. 1 aus einem Ablaufrohr 17, an oder in welchem der rohrförmige zweite Verdampfer 10b entlang geführt ist, wobei das Ablaufrohr 17 und der zweite Verdampfer 10b thermisch miteinander verbunden sind. Um die Interaktionslänge zwischen Verdampfer 10b und Ablaufrohr 17 zu verlängern und die Menge des im Ablaufbereich 16 speicherbaren Wassers auf mindestens etwa die Menge des während einer Prozessphase benötigen Wassers, d.h. mindestens etwa 3 Liter, zu erhöhen, sind Ablaufrohr 17 und der Verdampfer 10b vorzugsweise mäanderförmig oder spiralförmig verlegt. Um den Wärmetransfer zu verbessern, läuft das Wasser im Ablaufrohr 17 vorzugsweise in entgegen gesetzter Richtung zum Medium im zweiten Verdampfer 10b.

Das Medium vom ersten Verdampfer 10a und vom zweiten Verdampfer 10b wird in einem Kombinationsventil oder einen zweiten Weiche 18 vor dem Kompressor 7 wieder zusammengeführt.

Die Funktionsweise des Geräts ist wie folgt:
1. Zu Beginn einer Hauptreinigungsphase wird Frischwasser über das Frischwasserventil 3 eingelassen.
2. Gleichzeitig wird die Wärmepumpe gestartet, mit dem Ziel, Wärmeenergie aus dem Wasser im Ablaufbereich 16 dem Bottich 1 zuzuführen. Hierzu wird die Weiche 14 so eingestellt, dass der zweite Verdampfer 10b in Betrieb ist. Die Wärmepumpe wird abgeschaltet, wenn die Temperatur des Wassers im Ablaufbereich eine Schwelle, z.B. 5°C, unterschreitet. Erreicht die Temperatur im Bottich bzw. im Reinigungswasser dabei einen vorgegebenen Wert (je nach Programm z.B. zwischen 40° und 60°C) nicht, so kann zusätzlich elektrisch geheizt werden, entweder gleichzeitig mit oder nach dem Heizen mittels Wärmepumpe.
3. Am Ende der Hauptreinigungsphase wird das Wasser aus dem Bottich in den Ablaufbereich 16 abgelassen. Dort ersetzt es das Wasser, welches durch die Wärmepumpe in Schritt 2 abgekühlt wurde.
4. Über Frischwasserventil 3 wird neues Frischwasser für eine Zwischenspülphase eingelassen.
5. Die Wärmepumpe wird wieder in Gang gesetzt, um die Wärme vom Ablaufbereich 16 in den Bottich 1 zu fördern. Wiederum wird dabei das Wasser im Ablaufbereich 16 höchstens auf die erwähnte Schwelle von z.B. 5°C abgekühlt. Gleichzeitig wird die Zirkulationspumpe, welche Wasser vom Sumpf 2 in die Sprüharme fördert, vorzugsweise mindestens zeitweise mit geringer Leistung betrieben, und zwar derart, dass Wasser ohne Beaufschlagung des Spülguts aus dem unteren Sprüharm fliesst. Somit wird erreicht, dass das Wasser die Wärme vom ersten Kondensator 8 im Boden 12 des Bottichs 1 aufnehmen kann, ohne dass dabei das Spülgut vom kalten Wasser abgekühlt wird. Sobald die Wärme vom Ablaufbereich 16 getauscht ist, wird das Spülgut zwischengespült und sodann die Zwischenspülphase beendet.
6. Das Wasser aus dem Bottich 1 wird wiederum abgepumpt und ersetzt das kalte Wasser im Ablaufbereich 16.
7. Über Frischwasserventil 3 wird neues Frischwasser für eine Glanzspülphase (Klarspülphase) eingelassen.
8. Die Wärmepumpe wird wieder in Gang gesetzt, um die Wärme vom Ablaufbereich 16 in den Bottich 1 zu fördern. Wiederum wird die Zirkulationspumpe, welche Wasser vom Sumpf 2 in die Sprüharme fördert, vorzugsweise mindestens zeitweise mit geringer Leistung betrieben, damit das Wasser zwar umgepumpt wird, ohne aber das Spülgut zu beaufschlagen. Sobald die Wärme vom Ablaufbereich 16 getauscht ist, und gegebenenfalls nach optionaler elektrischer Zusatzbeheizung, wird das Spülgut glanzgespült und sodann die Glanzspülphase beendet. Das Glanzspülwasser kann an den Ablaufbereich 16 abgegeben werden.
9. Nun startet die Trockenphase. Die Weiche 14 wird umgeschaltet, so dass nun der erste Verdampfer 10a im Kreislauf liegt, nicht aber der zweite Verdampfer 10b. Die Wärmepumpe wird gestartet. Somit wird der Boden 12 des Bottichs 1 vom Kondensator 8 erwärmt, während die Seitenwand 15 vom Verdampfer 10a abgekühlt wird. Dadurch entsteht ein Konvektionsstrom im Bottich 1, indem Luft über dem Kondensator 8 aufgewärmt wird und aufsteigt. Diese Luft durchströmt das Spülgut und trocknet dieses. Die Luft kommt sodann mit der Seitenwand 15 in Kontakt, wo sie abgekühlt wird, so dass ihr Wasser entzogen wird. Das auskondensierte Wasser läuft der Seitenwand 15 entlang nach unten und gelangt in den Sumpf 2.

Die Konvektion in Schritt 9 kann verstärkt werden, indem, wie gezeigt, der Kondensator 8 nur an einem von der ersten Seitenwand 15 abgewandten Bereich des Bodens 12 angeordnet ist.

Aus dem obigen Prozessablauf ist ersichtlich, dass die Wärmepumpe zwei Zwecken dient. Einerseits wird sie dazu verwendet, Wärme aus dem Ablaufbereich 16 in den Bottich 1 bzw. das dort vorhandene Wasser zu transferieren. Weiter wird sie dazu eingesetzt, der Luft im Bottich 1 während der Trocknung Wasser zu entziehen. Dabei werden die beiden Verdampfer 10a und 10b alternativ eingesetzt. Indem jedem Verdampfer ein eigenes Expansionsventil 9a bzw. 9b zugeordnet ist, können die Expansionsventile den Grössen und gewünschten Betriebstemperaturen der beiden Verdampfer optimal angepasst werden. Zudem kann in diesem Fall die Weiche 14 im Hochdruckbereich angeordnet werden, wo deren Strömungswiderstand eine kleinere Rolle spielt. Es ist allerdings auch denkbar, nur ein gemeinsames Expansionsventil für beide Verdampfer 10a, 10b vorzusehen.

Im obigen Beispiel wird in den Schritten 5 und 8 Wärme aus der jeweilig vorhergehenden Prozessphase in die laufende Prozessphase transferiert. Je nach Zahl der Prozessphasen können auch weitere solche Schritte stattfinden. Dabei wird jeweils am Ende der Prozessphase das abgekühlte Wasser im Ablaufbereich 16 mit gebrauchtem, warmem Wasser ersetzt.

Denkbar ist es auch, in der Trockenphase zumindest zeitweise den zweiten Verdampfer 10b zu betreiben, entweder zusammen (parallel) oder alternierend zum ersten Verdampfer, um so dem Bottich 1 noch weiter Wärme aus dem Ablaufbereich 16 zuzuführen.

Die beiden oben genannten Funktionen der Wärmepumpe (Trocknungsprozess und Wärmetransfer) können auch einzeln eingesetzt werden. So zeigt Fig. 2 eine einfachere Ausführung eines Geschirrspülers, bei welcher lediglich der erste Verdampfer 10a vorhanden ist. Der zweite Verdampfer 10b ist weggelassen, wodurch sich die Konstruktion vereinfacht. In diesem Fall wird die Wärmepumpe lediglich dazu eingesetzt, die Trocknung zu unterstützen.

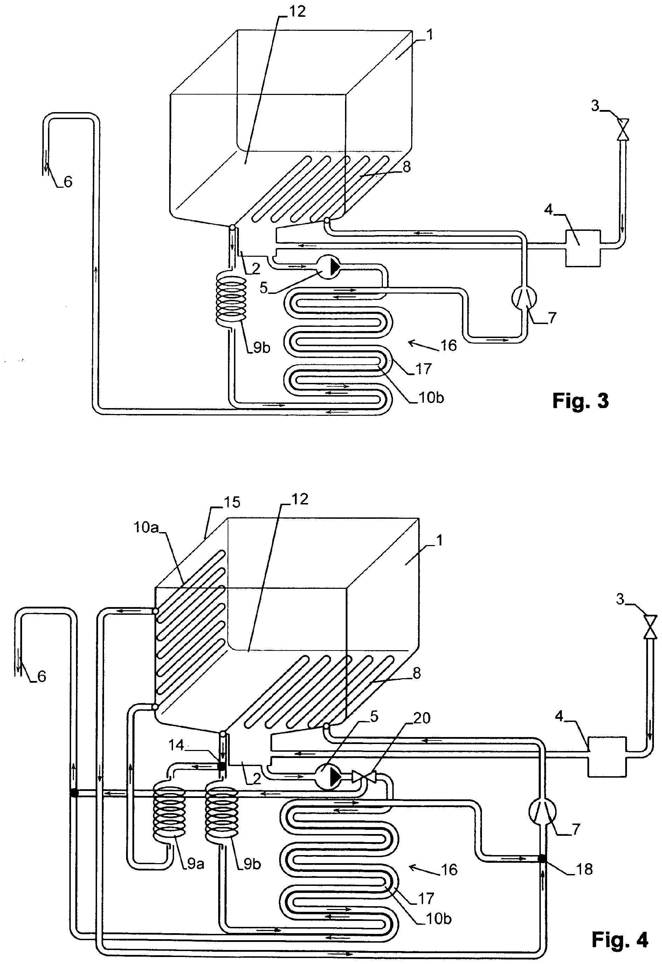

Entsprechend ist in Fig. 3 eine alternative Ausführung dargestellt, bei welcher lediglich der zweite Verdampfer 10b vorhanden und der erste Verdampfer 10a weggelassen ist. Wiederum vereinfacht sich die Konstruktion. In diesem Fall wird die Wärmepumpe dazu eingesetzt, Wärme von einer Prozessphase in eine spätere Prozessphase zu transferieren.

Eine weitere Ausführung ist in Fig. 4 dargestellt. Hier ist ein Überbrückungsventil 20 vorgesehen, mit welchem Wasser vom Bottich 1 wahlweise unter Umgehung des Ablaufbereichs 16 aus dem Gerät an die Abflussleitung 6 abgegeben werden kann. Dadurch wird es möglich, einen Wärmetransfer zwischen zwei Prozessphasen durchzuführen, selbst wenn diese durch eine dritte Prozessphase getrennt sind. Insbesondere benötigt die Zwischenspülphase nicht unbedingt Wärme, so dass mit dem Aufbau gemäss Fig. 4 der oben beschriebene Prozessablauf dahingehend geändert werden kann, dass die Wärmepumpe in der Zwischenspülphase, d.h. in Schritt 5, nicht betrieben wird. Am Schluss der Zwischenspülphase wird das Wasser sodann nicht in den Ablaufbereich 16 abgegeben, sondern unter Umgehung des Ablaufbereichs 16 direkt an die Abflussleitung 6. Somit kann in der darauf folgenden Klarspülphase die Wärme aus dem heissen Wasser der Hauptreinigungsphase in den Bottich gepumpt werden. Dadurch wird ein unnötiger Wärmeverlust vermieden. Ausserdem kann die Zwischenspülphase verkürzt werden, da kein Wärmetransfer erforderlich ist.

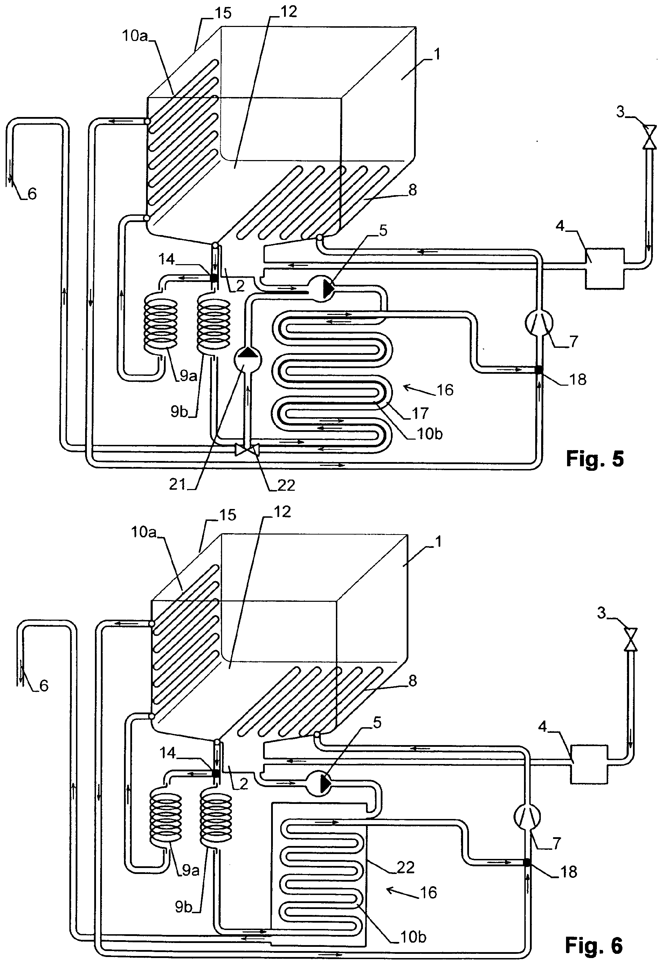

Eine weitere Ausführung des Geschirrspülers ist in Fig. 5 dargestellt. Hier ist eine zusätzliche Zirkulationspumpe 21 sowie ein Umschaltventil 22 am Ende des Ablaufbereichs 16 vorgesehen, so dass das Wasser im Ablaufbereich 16 umgepumpt werden kann. Dadurch kann der Wärmetransfer zwischen dem zweiten Verdampfer 10b und dem Wasser im Ablaufbereich 16 beschleunigt werden.

In der Ausführung nach Fig. 6 wird das Wasser im Ablaufbereich durch einen Tank 22 geführt. Der Tank 22 übernimmt dabei die Speicheraufgabe des Ablaufrohrs 17, zeichnet sich aber durch eine bessere Raumnutzung aus. Allerdings sollte in diesem Fall darauf geachtet werden, dass der Tank 22 so ausgestaltet wird, dass beim Nachfliessen von neuem Abwasser eine möglichst geringe Durchmischung mit dem alten Abwasser stattfindet. Zudem muss der Tank 22 so ausgestaltet werden, dass sich möglichst wenige Verschmutzungen ablagern können. Bei Verwendung eines Ablaufrohrs 17 ist die Gefahr einer Durchmischung sowie einer Verschmutzungsablagerung grundsätzlich geringer.

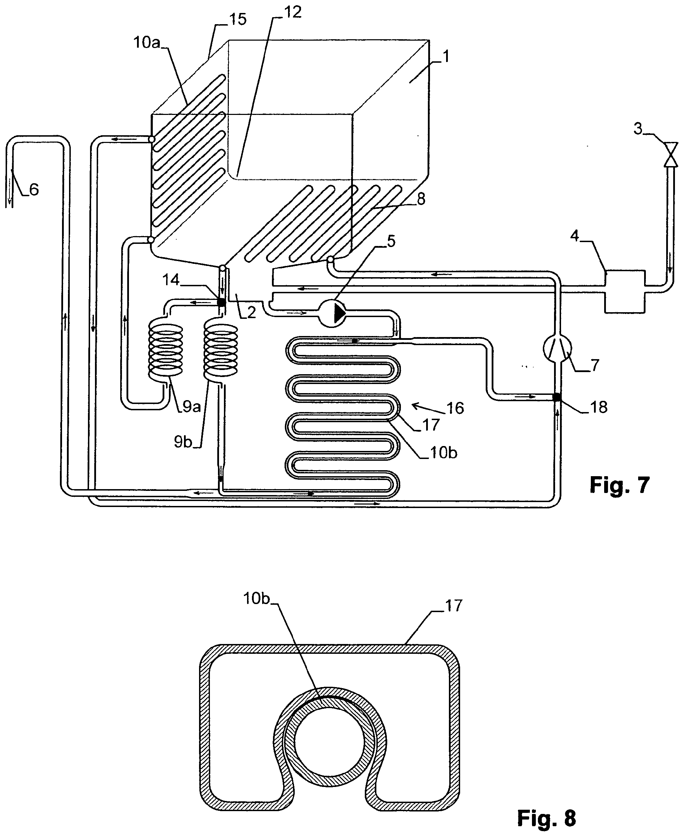

In der Ausführung nach Fig. 7 verlaufen die Leitung des zweiten Verdampfers 10b und das Ablaufrohr 17 nicht nebeneinander, sondern der Verdampfer 10b ist mindestens teilweise vom Ablaufrohr 17 umschlossen.

Eine bevorzugte Konstruktion dieses Wärmetauschers ist in Fig. 8 dargestellt. Wie ersichtlich, ist der Verdampfer 10b in einer längs verlaufenden Ausnehmung des Ablaufrohrs 17 angeordnet. Vorzugsweise ist das Ablaufrohr dabei als Kunststoff-Blasteil ausgestaltet und drückt sich elastisch gegen den Verdampfer 10b.

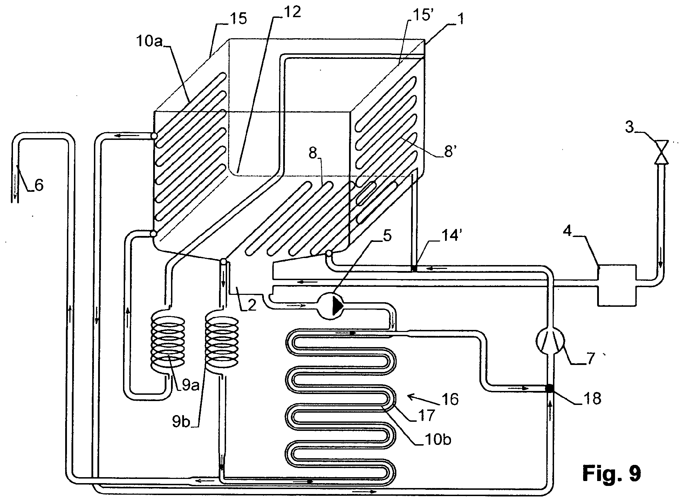

Eine weitere Ausführung wird in Fig. 9 dargestellt, welche einige wichtige weitere Prinzipen illustriert, die im Folgenden erläutert werden.

Zunächst ist in dieser Ausführung an einer zweiten Seitenwand 15' des Bottichs 1, welche vorzugsweise der ersten Seitenwand 15 mit dem Kondensator 10a gegenüber liegt, ein Kondensator 8' angeordnet. Dieser kann grundsätzlich den Kondensator 8 ersetzen oder ergänzen. Im Folgenden werden der Kondensator 8 "erster Kondensator" und der Kondensator 8' "zweiter Kondensator" genannt.

Die Anordnung eines oder des zweiten Kondensators 8' an der Seitenwand hat den Vorteil, dass während der Trockenphase nicht der Boden 12 des Bottichs geheizt zu werden braucht, wie dies zwangsläufig bei einem Betrieb des ersten Kondensators 8 geschehen würde. Da über den Boden 12 des Bottichs 1 während der Trockenphase relativ viel Kondenswasser läuft, das eigentlich nicht mehr erwärmt zu werden braucht, ist die Verwendung eines Kondensators 8' an der Seitenwand während der Trockenphase effizienter.

Vorzugsweise sind der zweite Kondensator 8' sowie der erste Verdampfer 10a in Serie angeordnet, mit dazwischen liegendem Expansionsventil 9a, so dass das Kühlmedium während der Trockenphase durch den zweiten Kondensator 8' und den ersten Verdampfer 10a geführt werden kann, um so der Prozessluft Wasser zu entziehen.

Falls zusätzlich zum zweiten Kondensator 8' auch der erste Kondensator 8 am Boden 12 des Bottichs 1 vorgesehen ist, kann der erste Kondensator 8 dazu verwendet werden, in der oben beschriebenen Weise dem Bottich 1 während der Reinigungsphase Wärme aus dem Ablaufbereich 16 zuzuführen. Hierzu ist der erste Verdampfer 8 besser geeignet als der zweite Verdampfer 8', da der erste Verdampfer das über den Boden 12 laufende Prozesswasser effizient zu erwärmen vermag.

Der erste Kondensator 8 am Boden 12 kann jedoch auch entfallen oder anderswo angeordnet sein, falls die Wärme dem Prozesswasser an einem anderen Ort zugeführt werden soll. Beispielsweise kann der erste Kondensator thermisch mit dem Leitungssystem oder der Umwälzpumpe zum Umpumpen von Wasser aus dem Sumpf in die Sprüharme gekoppelt sein, oder die Wärme kann dem Bottich nur über den zweiten Kondensator 8' zugeführt werden.

Vorzugsweise sind der erste Kondensator 8 und der zweite Verdampfer 10b in Serie angeordnet, mit dazwischen liegendem Expansionsventil 9b, so dass das Kühlmedium während der Reinigungsphase durch den ersten Kondensator 8 und den zweiten Verdampfer 10b geführt werden kann, um so Wärme aus dem Ablaufbereich 16 in das Prozesswasser zu fördern.

Wie aus Fig. 9 weiter ersichtlich, kann zwischen dem Kompressor 7 und dem ersten und dem zweiten Kondensator 8 bzw. 8' eine Weiche 14' angeordnet sein, um das gepumpte Medium wahlweise dem ersten und/oder dem zweiten Kondensator 8 bzw. 8' zuzuführen.

## Patentansprüche

1. Geschirrspüler mit einem Bottich (1) zur Aufnahme von Spülgut, wobei er eine Wärmepumpe aufweist, und wobei die Wärmepumpe mindestens einen Kondensator (8) und mindestens einen Verdampfer (10a, 10b) aufweist, welche derart angeordnet sind, dass dem Prozesswasser oder dem Bottich (1) Wärme entzogen und/oder zugeführt werden kann, wobei der Verdampfer (10b) bzw. mindestens einer der Verdampfer (10a, 10b) thermisch mit einem Ablaufbereich (16) gekoppelt ist, wobei der Geschirrspüler dazu ausgestaltet ist, Wasser vom Bottich (1) nach Gebrauch durch den Ablaufbereich (16) abzugeben, und wobei er weiter dazu ausgestaltet ist,
das Geschirr in mindestens einer ersten und einer zweiten Prozessphase zu reinigen,
am Ende der ersten Prozessphase Prozesswasser aus dem Bottich (1) in den Ablaufbereich (16) zu leiten,
am Anfang der zweiten Prozessphase Frischwasser in den Bottich (1) zu führen, und
in der zweiten Prozessphase dem Prozesswasser im Ablaufbereich (16) mit der Wärmepumpe Wärme zu entziehen und dem Prozesswasser im Bottich (1) zuzuführen.

2. Geschirrspüler nach Anspruch 1, wobei der Kondensator (8) bzw. mindestens einer der Kondensatoren und/oder der Verdampfer (10a) bzw. mindestens einer der Verdampfer (10a, 10b) an einer Wand des Bottichs (1) angeordnet ist und insbesondere dieser Wand entlang verläuft.

3. Geschirrspüler nach Anspruch 2, wobei mindestens ein Kondensator (8) am Boden (12) des Bottichs (1) angeordnet ist.

4. Geschirrspüler nach einem der Ansprüche 2 oder 3 wobei der Verdampfer (10a) bzw. mindestens einer der Verdampfer (10a, 10b) an einer ersten Seitenwand (15) des Bottichs (1) angeordnet ist.

5. Geschirrspüler nach den Ansprüchen 3 und 4, wobei der Kondensator (8) an einem von der ersten Seitenwand abgewandten Bereich des Bodens (12) angeordnet ist.

6. Geschirrspüler nach einem der Ansprüche 2 bis 4, wobei mindestens ein Kondensator (8') an einer Seitenwand (15') des Bottichs angeordnet ist.

7. Geschirrspüler nach Anspruch 6, wobei an einer dem Kondensator (8') gegenüber liegenden Seitenwand (15) des Bottichs ein Verdampfer (10a) angeordnet ist.

8. Geschirrspüler nach Anspruch 3 und 6 wobei am Boden ein erster Kondensator (8) und an der Seitenwand (15') ein zweiter Kondensator (8') angeordnet sind, wobei die Wärmepumpe einen Kompressor (7) aufweist, und wobei zwischen dem Kompressor (7) und dem ersten und dem zweiten Kondensator (8, 8') eine Weiche (14') angeordnet ist, um ein gepumptes Medium wahlweise dem ersten und dem zweiten Kondensator (15, 15') zuzuführen.

9. Geschirrspüler nach einem der vorangehenden Ansprüche, wobei der Geschirrspüler einen ersten Verdampfer (10a) aufweist, der thermisch mit dem Bottich (1) gekoppelt ist und einen zweiten Verdampfer (10b) aufweist, der thermisch mit dem Ablaufbereich (16) gekoppelt ist.

10. Geschirrspüler nach Anspruch 7, wobei der erste Kondensator (8) in Serie zum zweiten Verdampfer (10b) und der zweite Kondensator (8') in Serie zum ersten Verdampfer (10a) angeordnet sind.

11. Geschirrspüler nach einem der Ansprüche 9 oder 10, wobei er für die zwei Verdampfer (10a, 10b) zwei separate Expansionsventile (9a, 9b) aufweist.

12. Geschirrspüler nach einem der vorangehenden Ansprüche, wobei der Ablaufbereich (16) ein Ablaufrohr (17) aufweist, an oder in welchem der zweite Verdampfer (10b) entlang geführt ist, und insbesondere wobei das Ablaufrohr (17) und der zweite Verdampfer (10b) mäanderförmig oder spiralförmig verlegt sind.

13. Verfahren zum Betrieb des Geschirrspülers nach einem der vorangehenden Ansprüche, wobei mit der Wärmepumpe dem Prozesswasser oder dem Bottich (1) Wärme entzogen und/oder zugeführt wird, **dadurch gekennzeichnet, dass** das Geschirr in mindestens einer ersten und einer zweiten Prozessphase gereinigt wird, wobei am Ende der ersten Prozessphase Prozesswasser aus dem Bottich (1) in einen Ablaufbereich geleitet wird und am Anfang der zweiten Prozessphase Frischwasser in den Bottich (1) geführt wird, wobei in der zweiten Prozessphase dem Prozesswasser im Ablaufbereich mit der Wärmepumpe Wärme entzogen und dem Prozesswasser im Bottich (1) zugeführt wird.

14. Verfahren nach Anspruch 13, wobei in einer Trockenphase mit der Wärmepumpe einem ersten Wandbereich, insbesondere einer Seitenwand (15'), des Bottichs (1) Wärme zugeführt und einem zweiten Wandbereich, insbesondere einer ersten Seitenwand (15), Wärme entzogen wird und so ein Konvektionsstrom im Bottich (1) erzeugt wird.

15. Verfahren nach einem der Ansprüche 13 oder 14, wobei am Ende der zweiten Prozessphase das Prozesswasser vom Bottich (1) in den Ablaufbereich geführt wird und dort das Prozesswasser aus der ersten Prozessphase ersetzt.

16. Verfahren nach Anspruch 15, wobei
in der Reinigungsphase ein Medium durch einen ersten Kondensator (8) gepumpt wird, um dem Prozesswasser Wärme zuzuführen, und durch einen zweiten Verdampfer (10b), um Wasser im Ablaufbereich Wärme zu entziehen, und
in der Trockenphase dasselbe Medium durch einen zweiten Kondensator (8') an einer zweiten Seitenwand (15') des Bottichs (1) und durch einen ersten Verdampfer (10a) an einer ersten Seitenwand (15) des Bottichs (1) gepumpt wird.

## Claims

1. Dishwasher with a vat (1) for receiving dishes, wherein it has a heat pump and wherein the heat pump has at least one condenser (8) and at least one evaporator (10a, 10b), which are arranged in such a way that heat can be extracted from and/or supplied to the process water or the vat (1), wherein the evaporator (10b) or at least one of the evaporators (10a, 10b), respectively, is thermally coupled to a drain area (16), wherein the dishwasher is adapted to release water from the vat (1) through the drain area (16) after use, and wherein it is further adapted
to clean the dishes in at least a first and a second process phase,
to guide process water from the vat (1) into the drain area (16) at the end of the first process phase,
to guide fresh water into the vat (1) at the beginning of the second process phase, and
in the second process phase to extract heat from the process water in the drain area (16) with the heat pump and to supply it to the process water in the vat (1).

2. Dishwasher according to claim 1, wherein the condenser (8) or at least one of the condensers, respectively, and/or the evaporator (10a) or at least one of the evaporators (10a, 10b), respectively, is arranged at a wall of the vat (1) and particularly extends along this wall.

3. Dishwasher according to claim 2, wherein at least one condenser (8) is arranged on the floor (12) of the vat (1).

4. Dishwasher according to one of the claims 2 or 3, wherein the evaporator (10a) or at least one of the evaporators (10a, 10b), respectively, is arranged at a first lateral wall (15) of the vat (1).

5. Dishwasher according to the claims 3 and 4, wherein the condenser (8) is arranged in an area of the floor (12) which is facing away from the first lateral wall.

6. Dishwasher according to one of the claims 2 to 4, wherein at least one condenser (8') is arranged at a lateral wall (15') of the vat.

7. Dishwasher according to claim 6, wherein an evaporator (10a) is arranged at a lateral wall (15) of the vat which is opposite of the condenser (8').

8. Dishwasher according to claim 3 and 6, wherein a first condenser (8) is arranged on the floor and a second condenser (8') is arranged at the lateral wall (15'), wherein the heat pump has a compressor (7), and wherein a switch (14') is arranged between the compressor (7) and the first and the second condenser (8, 8'), in order to supply a pumped medium optionally to the first and the second condenser (15, 15').

9. Dishwasher according to one of the preceding claims, wherein the dishwasher has a first evaporator (10a) which is thermally coupled to the vat (1) and a second evaporator (10b) which is thermally coupled to the drain area (16).

10. Dishwasher according to claim 7, wherein the first condenser (8) is arranged in series with the second evaporator (10b) and the second condenser (8') is arranged in series with the first evaporator (10a).

11. Dishwasher according to one of the claims 9 or 10, wherein it has two separate expansion valves (9a, 9b) for the two evaporators (10a, 10b).

12. Dishwasher according to one of the preceding claims, wherein the drain area (16) has a drain pipe (17), at which or inside which the second evaporator (10b) is extending, and particularly wherein the drain pipe (17) and the second evaporator (10b) are laid in a meander-shaped or spiral way.

13. Method for operating the dishwasher according to one of the preceding claims, wherein heat is extracted from and/or supplied to the process water or the vat (1), **characterized in that** the dishes are cleaned in at least a first and a second process phase, wherein at the end of the first process phase process water is guided from the vat (1) into a drain area and at the beginning of the second process phase fresh water is guided into the vat (1), wherein in the second process phase heat is extracted from the process water in the drain area with the heat pump and is supplied to the process water in the vat (1).

14. Method according to claim 13, wherein in a drying phase heat is supplied to a first wall section, particularly a lateral wall (15'), of the vat (1) with the heat pump and heat is extracted from a second wall section, particularly from a first lateral wall (15), and in this way a convection flow is generated inside the vat (1).

15. Method according to one of the claims 13 or 14, wherein at the end of the second process phase the process water is guided from the vat (1) into the drain area and replaces there the process water from the first process phase.

16. Method according to claim 15, wherein
in the cleaning phase a medium is pumped through a first condenser (8) in order to supply heat to the process water, and through a second evaporator (10b) in order to extract heat from the water in the drain area, and
in the drying phase the same medium is pumped through a second condenser (8') at a second lateral wall (15') of the vat (1) and is pumped through a first evaporator (10a) at a first lateral wall (15) of the vat (1).

## Revendications

1. Lave-vaisselle avec une cuve (1) pour recevoir de la vaisselle, ayant une pompe de chaleur et la pompe de chaleur ayant au moins un condenseur (8) et au moins un évaporateur (10a, 10b), qui sont arrangés de sorte que de la chaleur peut être extraite de et/ou alimentée dans l'eau de processus ou la cuve (1), l'évaporateur (10b) ou bien au moins un des évaporateurs (10a, 10b) étant thermiquement couplé avec une zone de drainage (16), le lave-vaisselle étant adapté à libérer de l'eau de la cuve (1) à travers la zone de drainage (16) après l'usage, et étant en outre adapté
à nettoyer la vaisselle pendant au moins une première et une deuxième phase de processus,
à guider de l'eau de processus à partir de la cuve (1) dans la zone de drainage (16) à la fin de la première phase de processus,
à guider de l'eau fraîche dans la cuve (1) au commencement de la deuxième phase de processus, et
dans la deuxième phase de processus, à extraire de la chaleur de l'eau de processus dans la zone de drainage (16) avec la pompe de chaleur et à l'alimenter à l'eau de processus dans la cuve (1).

2. Lave-vaisselle selon la revendication 1, le condenseur (8) ou bien au moins un des condenseurs et/ou l'évaporateur (10a) ou bien un des évaporateurs (10a, 10b) étant arrangé à une paroi de la cuve (1) et particulièrement s'étendant le long de cette paroi.

3. Lave-vaisselle selon la revendication 2, au moins un condenseur (8) étant arrangé au fond (12) de la cuve (1).

4. Lave-vaisselle selon l'une des revendications 2 ou 3, l'évaporateur (10a) ou bien au moins un des évaporateurs (10a, 10b) étant arrangé à une première paroi latérale (15) de la cuve (1).

5. Lave-vaisselle selon les revendications 3 et 4, le condenseur (8) étant arrangé dans une zone du fond (12) qui est opposée à la première paroi latérale.

6. Lave-vaisselle selon l'une des revendications 2 à 4, au moins un condenseur (8') étant arrangé à une paroi latérale (15') de la cuve.

7. Lave-vaisselle selon la revendication 6, un évaporateur (10a) étant arrangé à une paroi latérale (15) de la cuve qui est opposée au condenseur (8').

8. Lave-vaisselle selon la revendication 3 et 6, un premier condenseur (8) étant arrangé au fond et un deuxième condenseur (8') étant arrangé à la paroi latérale (15'), la pompe de chaleur ayant un compresseur (7), et un commutateur (14') étant arrangé entre le compresseur (7) et le premier et le deuxième condenseur (8, 8') afin d'alimenter un médium pompé optionnellement au premier ou au deuxième condenseur (15, 15').

9. Lave-vaisselle selon l'une des revendications précédentes, le lave-vaisselle ayant un premier évaporateur (10a) qui est thermiquement couplé avec la cuve (1) et un deuxième évaporateur (10b) qui est thermiquement couplé avec la zone de drainage (16).

10. Lave-vaisselle selon la revendication 7, le premier condenseur (8) étant arrangé en série avec le deuxième évaporateur (10b) et le deuxième condenseur (8') étant arrangé en série avec le premier évaporateur (10a).

11. Lave-vaisselle selon l'une des revendications 9 ou 10, ayant deux soupapes d'expansion séparées (9a, 9b) pour les deux évaporateurs (10a, 10b).

12. Lave-vaisselle selon l'une des revendications précédentes, la zone de drainage (16) ayant un tuyau de drainage (17) auquel ou à l'intérieur duquel le deuxième évaporateur (10b) s'étend, et particulièrement le tuyau de drainage (17) et le deuxième évaporateur (10b) étant posés en forme de méandre ou de spirale.

13. Procédé d'opération du lave-vaisselle selon l'une des revendications précédentes, de la chaleur étant extraite de et/ou alimentée dans l'eau de processus ou la cuve (1), **caractérisé en ce que** la vaisselle est nettoyée pendant au moins une première et une deuxième phase de processus, à la fin de la première phase de processus de l'eau de processus étant guidée à partir de la cuve (1) dans une zone de drainage et au commencement de la deuxième phase de processus de l'eau fraîche étant guidée dans la cuve (1), dans la deuxième phase de processus de la chaleur étant extraite de l'eau de processus dans la zone de drainage avec la pompe de chaleur et étant alimentée à l'eau de processus dans la cuve (1).

14. Procédé selon la revendication 13, pendant une phase de séchage, de la chaleur étant alimentée à une première section de paroi, particulièrement à une paroi latérale (15'), de la cuve (1) avec la pompe de chaleur et de la chaleur étant extraite d'une deuxième section de paroi, particulièrement d'une première paroi latérale (15), et par cela générant un flux de convection à l'intérieur de la cuve (1).

15. Procédé selon l'une des revendications 13 ou 14, à la fin de la deuxième phase de processus l'eau de processus étant guidée à partir de la cuve (1) dans la zone de drainage et replaçant là-bas l'eau de processus de la première phase de processus.

16. Procédé selon la revendication 15, un médium étant pompé pendant la phase de nettoyage à travers un premier condenseur (8) afin d'alimenter de la chaleur à l'eau de processus, et à travers un deuxième évaporateur (10b) afin d'extraire de la chaleur de l'eau dans la zone de drainage, et
pendant la phase de séchage, le même médium étant pompé à travers un deuxième condenseur (8') à une deuxième paroi latérale (15') de la cuve (1) et étant pompé à travers un premier évaporateur (10a) à une première paroi latérale (15) de la cuve (1).
